# EUROPEAN PATENT SPECIFICATION

(11) **EP 3 768 554 B1**
(45) Date of publication and mention of the grant of the patent: **07.10.2026**
(21) Application number: 18910614.9
(22) Date of filing: 22.03.2018
(51) Int. Cl.: B60Q 1/26, H04B 10/00, H04W 4/46, H04B 10/116, G08G 1/00, G08G 1/0967, B60Q 1/00, G05D 1/00

(54) **VISIBLE LIGHT COMMUNICATION ASSISTED SECURE AUTONOMOUS PLATOON**
DURCH KOMMUNIKATION IM SICHTBAREN LICHT UNTERSTÜTZTE SICHERE AUTONOME ELEKTRONISCHE DEICHSEL
PELOTON AUTONOME SÉCURISÉ ASSISTÉ PAR COMMUNICATION PAR LUMIÈRE VISIBLE

(43) Date of publication of application: 27.01.2021
(73) Proprietor: KOC Universitesi, 34450 Istanbul (TR)
(72) Inventor: UCAR, Seyhan, 34450 Sariyer/Istanbul (TR); OZKASAP, Oznur, 34450 Sariyer/Istanbul (TR); ERGEN, Sinem Coleri, 34450 Sariyer/Istanbul (TR)
(74) Representative: Atalay, Baris
(86) International application number: PCT/TR2018/050110
(87) International publication number: WO 2019/182525

(56) References cited:
- WO-A1-2007/102097
- WO-A1-2018/035145
- US-A1- 2015 023 668
- US-A1- 2016 179 094
- ISHIHARA SUSUMU ET AL: "Improving reliability of platooning control messages using radio and visible light hybrid communication", 2015 IEEE VEHICULAR NETWORKING CONFERENCE (VNC), IEEE, 16 December 2015 (2015-12-16), pages 96 - 103, XP032852415, DOI: 10.1109/VNC.2015.7385553
- UCAR SEYHAN ET AL: "Security vulnerabilities of IEEE 802.11p and visible light communication based platoon", 2016 IEEE VEHICULAR NETWORKING CONFERENCE (VNC), IEEE, 8 December 2016 (2016-12-08), pages 1 - 4, XP033052815, DOI: 10.1109/VNC.2016.7835972
- SEGATA MICHELE ET AL: "On platooning control using IEEE 802.11p in conjunction with visible light communications", 2016 12TH ANNUAL CONFERENCE ON WIRELESS ON-DEMAND NETWORK SYSTEMS AND SERVICES (WONS), IFIP, 20 January 2016 (2016-01-20), pages 1 - 4, XP032878398
- BAZZI ALESSANDRO ET AL: "Visible light communications as a complementary technology for the internet of vehicles", COMPUTER COMMUNICATIONS, ELSEVIER SCIENCE PUBLISHERS BV, AMSTERDAM, NL, vol. 93, 9 July 2016 (2016-07-09), pages 39 - 51, XP029741266, ISSN: 0140-3664, DOI: 10.1016/J.COMCOM.2016.07.004
- MOHAMMAD Y ABUALHOUL ET AL: "Platooning control using visible light communications: A feasibility study", 16TH INTERNATIONAL IEEE CONFERENCE ON INTELLIGENT TRANSPORTATION SYSTEMS (ITSC 2013), 1 January 2013 (2013-01-01), pages 1535 - 1540, XP055479346, DOI: 10.1109/ITSC.2013.6728448
- SEYHAN UCAR ET AL: "SecVLC", MOBILITY MANAGEMENT AND WIRELESS ACCESS, ACM, 2 PENN PLAZA, SUITE 701 NEW YORK NY 10121-0701 USA, 13 November 2016 (2016-11-13), pages 123 - 129, XP058306758, ISBN: 978-1-4503-4503-3, DOI: 10.1145/2989250.2989259

## Description

### Technical Field of the Present Invention

The invention presented hereby generally concerns an autonomous vehicle platoon, consisting of individual vehicles following a leader with no explicit human input, improving throughput, transportation efficiency and safety of land connections by combining the advantages of sensing the environment and making information available beyond driver's knowledge through radio frequency and VLC-based data communication; between the members thereof through a special security protocol ensuring network integrity over data transmission using radio frequency and visible light communication.

### Prior Art/Background of the Present Invention

Vehicular ad-hoc networks (VANET) and autonomous vehicle platoons as a subset come with several proposed types of intervehicular communication solutions/frameworks, among them digital signature approach, certification based security and cryptographic key distribution-management. Next to this, the majority of them employ radio frequency protocol IEEE 802.11p, which has many problems such as radio frequency scarcity caused by increased wireless data traffic from rapidly growing wireless mobile devices creating pressure on the radio frequency (RF) spectrum. Furthermore, IEEE 802.11p suffers from security problems due to the usage of omnidirectional antennas added to the high transmission range of which makes this technology vulnerable to adversaries blocking and interrupting the communication among the vehicles, leading to vehicular network instability and vulnerability.

To address these security concerns various solutions have been proposed on different ends and media; namely digital signature approach, certification based security and cryptographic key distribution/management across known radio frequency systems. The invented protocol has features; it includes a mechanism for secret key establishment and periodic update via the usage of VLC to ensure the participation of only the target vehicle in communication; it adopts an authentication process with the usage of cipher-based message authentication code to ensure the integrity of the packets; it utilizes data transmission over both IEEE 802.11p and VLC incorporating the encryption and decryption of the packets using the secret key generated between consecutive platoon members in the vehicle platoon to exploit the complementary propagation characteristics of data transmission over these protocols; it provides jamming detection and reaction mechanism to switch to VLC only communication based on packet reception characteristics; and it provides secure platoon maneuvering based on the joint usage of IEEE 802.11p and VLC while exploiting the directionality, limited range and impermeability properties of VLC.

Prior art documents regarding the present invention are gathered with respect to the vehicular ad hoc networks, data transmission media and security protocols maintained mutual data acquisition and handling therein. For example, the document denoted with the publication number US 20170318460 (A1) discloses a Li-Fi (falls within the realm of visible light communication) based network access employing multi-factor authentication between ligt fixture-bearing endpoints sharing requests and a code confined to a limited physicality. WO 201711717 (A1) identified as the closest document, defines a method of token-oriented and ACK/NACK centered communication between individual vehicles in a platoon which includes specialized data packet types such as payload, trailer, ID etc. This particular document appears to bank solely on the intrinsic physical security characteristics of visible light communication, established by each vehicle possessing forward and backward receivers and emitters. Other prior art documents such as CN 104394000 (A) and CN 107071774 (A) provide batch certification with pseudonym verification public key and identity-based short group signature respectively, both envisioned for VANETs with systems including road side units (RSU).

"Improving reliability of platooning control messages using radio and visible light hybrid communication" by Ishihara et al. investigates different jamming attack models for IEEE 802.11p/IEEE 1609.4 PHY/MAC, and proposes usage of visible light communication for reducing message delivery delay. Another document in the art, "Security vulnerabilities of IEEE 802.11p and visible light communication based platoon" by Ucar et al. investigates security vulnerabilities for dedicated short-range communication (DSRC) and compares DSRC & VLC schemes to DSRC schemes for ascertaining security vulnerabilities. Study by Segata and colleagues on reliability and scalability of VANET technologies titled "On platooning control using IEEE 802.11p in conjunction with visible light communications" teaches direct line of sight properties of VLC, and usage thereof as a backup for established radio frequency channels. Alessandro Bazzi and a team, in a metastudy titled "Visible light communications as a complementary technology for the internet of vehicles" considers offloading dedicated short-range communication technology with visible light communication in networks of crowd-sensing vehicles.

### Objects of the Present Invention

Primary object of the present invention is to provide an autonomous platoon with four distinct maneuvering/formation capabilities; a system for data transmission including a hybrid security protocol incorporating both IEEE 802.11p and visible light communication (VLC) as media, therefore establishing stability and improved security against attack from malicious entities such as packet forgery and jamming. The invention is defined in the appended claims.

### Summary of the Present Invention

In proposed invention, autonomous vehicles are organized into close proximity via platoon management protocol. A vehicle platoon is thus composed of platoon leader that is the frontmost vehicle in the platoon, in addition to one or more following vehicles that follow the leader. Vehicles are capable of IEEE 802.11p and visible light communication. Platoon management supports maneuver operations including entrance, leave, merge and split. The entrance and leave refer to joining and exiting the platoon, respectively. The merge operation details combining two platoons that are traveling on the same lane. Separating the big platoon into smaller ones is defined as platoon splitting. Each vehicle has its own vehicle information base (VIB) that locally stores information regarding itself and its preceding vehicle. The invention consists of four parts; secret key establishment and update mechanism, message authentication mechanism, data transmission mechanism and secure platoon maneuver operations.

VLC is a recently proposed alternative communication technology that could see use in achieving a secure communication protocol in vehicle platoons by the exploitation of its distinguishing propagation characteristics. The light directivity and impermeability through vehicles and obstacles of the optical signal may provide more secure data communication compared to IEEE 802.11p by limiting the transmission area. The secure data communication of VLC and high data rate/transmission range of IEEE 802.11p are complementary to each other in vehicle platooning. To ensure the secure communication, stable platoon transportation and the appropriate autonomous driving decision in an autonomous system, IEEE 802.11p and VLC based hybrid security protocol is proposed.

First part of the proposed invention is a secret key establishment and update mechanism that utilizes Diffie-Hellman key exchange method. Key exchange takes place between an initiator vehicle and a responder vehicle, triggered by a packet in response which two vehicles compute a private key and store it in respective VIBs to use in the encryption of following packets. Second part is where the message authentication is executed in accordance with a cipher-based message authentication code (CMAC), which is a block authentication algorithm that rejects a delivered packet if it"s not encrypted with the current secret key, if packet tags mismatch or if packet sequence numbers fail to be identical.

Third part of the invention comprises general data transmission across the entire platoon in this secure fashion between consecutive vehicle pairs, which mandates the encryption at the sender and decryption at the receiver using identical secret keys. An encrypted platoon data packet including a unique platoon identifier, platoon depth, lane identifier, sequence number, acceleration, speed, position and sender address of the packet transmitter is periodically issued by the platoon leader. This platoon data packet is encrypted by the secret key by the source, and the target vehicle getting this platoon data decrypts it via the established secret key, updating its own VIB once authentication is a success; later delivering the new, platoon data compiled from its VIB for transmission to the next vehicle over both IEEE 802.11p and visible light communication. Fourth part details four distinct maneuvering and vehicle formation actions all of which include packet exchange steps and authentication through aforementioned cipher-based message authentication code (CMAC) data transmission scheme.

### Brief Description of the Figures of the Present Invention

Accompanying drawings are given solely for the purpose of exemplifying a VLC-assisted autonomous platoon with secure communication , whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

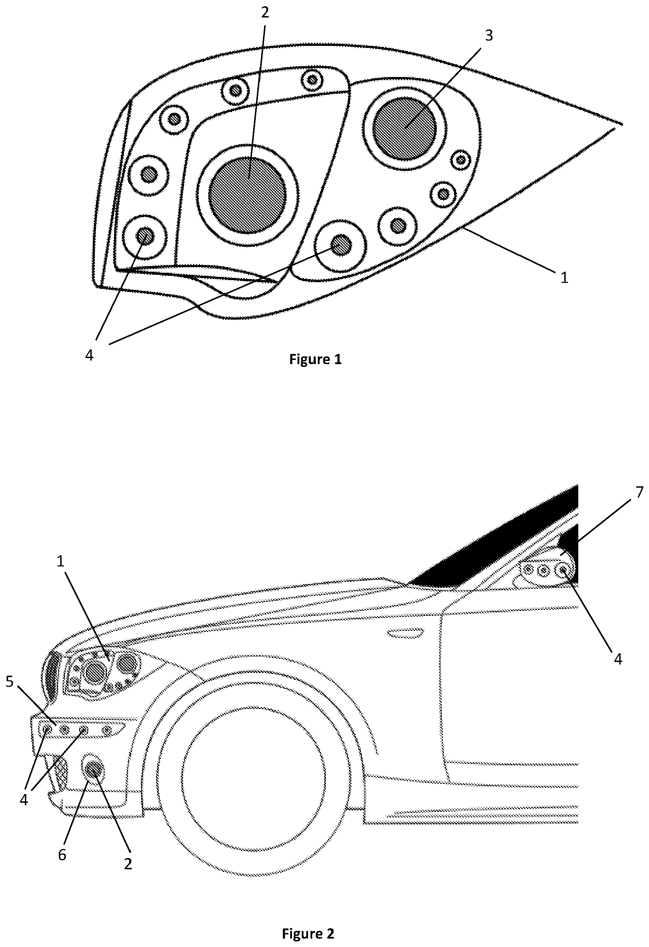

Fig. 1 demonstrates the visible light communication (VLC) configured vehicle headlight according to the present invention.
Fig. 2 demonstrates the vehicle front including positioning of visible light communication (VLC) configured headlight and other VLC receivers according to the present invention.

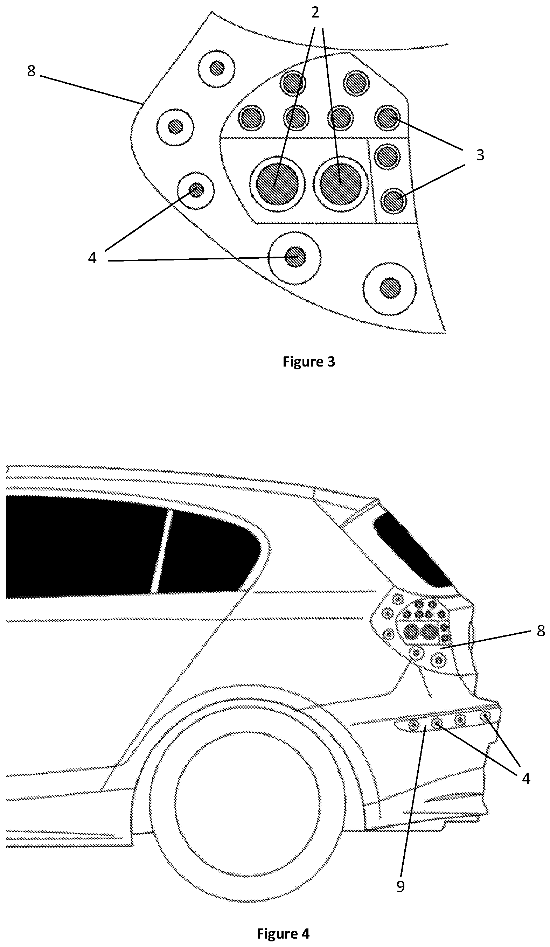

Fig. 3 demonstrates visible light communication (VLC) configured vehicle taillight according to the present invention.
Fig. 4 demonstrates the vehicle back including positioning of visible light communication (VLC) configured taillight and other VLC receivers according to the present invention.

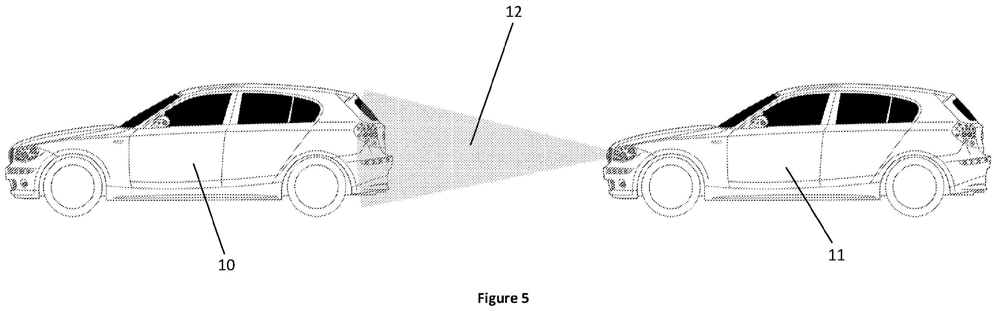

Fig. 5 demonstrates the visible light communication (VLC) based interaction between two consecutive vehicles according to the present invention.

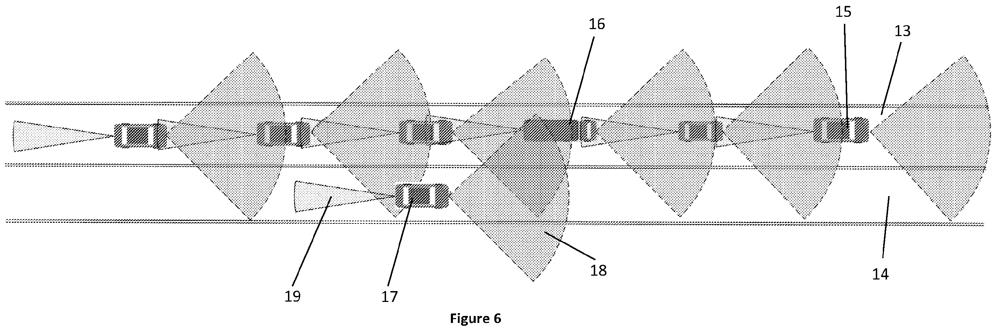

Fig. 6 demonstrates an autonomous platoon travelling on a lane with a vehicle sending joining request on the next lane according to the present invention.

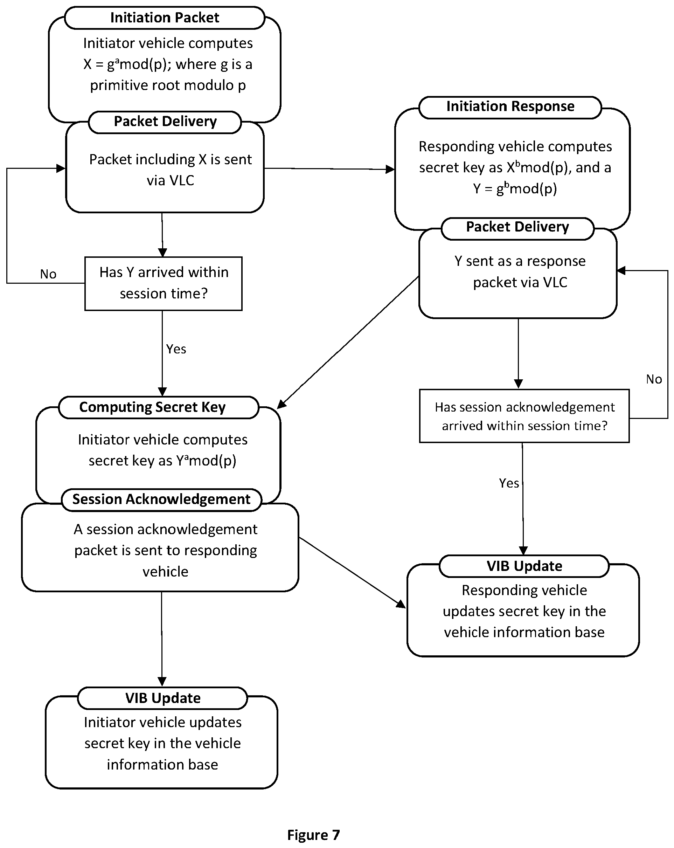

Fig. 7 demonstrates the flow diagram of a secret key establishment and update step according to the present invention.

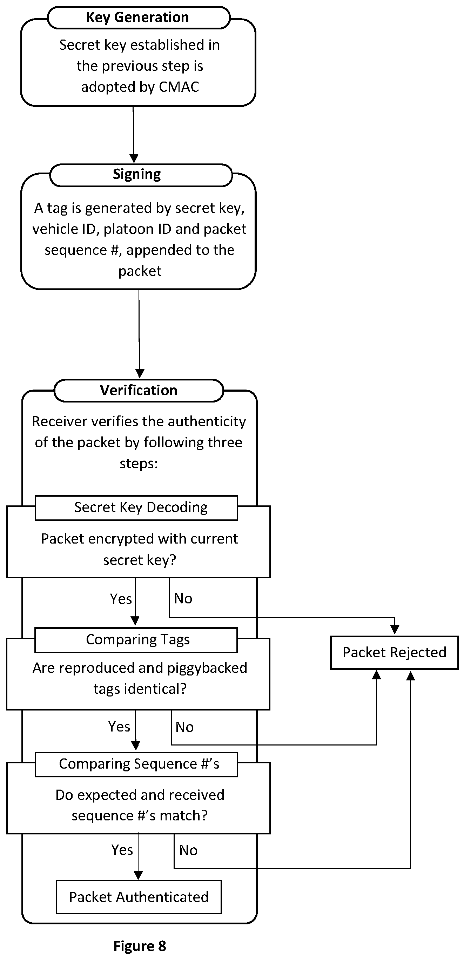

Fig. 8 demonstrates the flow diagram of message authentication step according to the present invention.

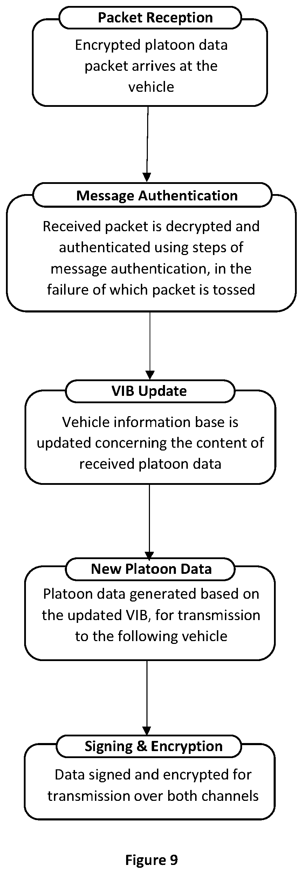

Fig. 9 demonstrates the flow diagram of secure data transmission according to the present invention.

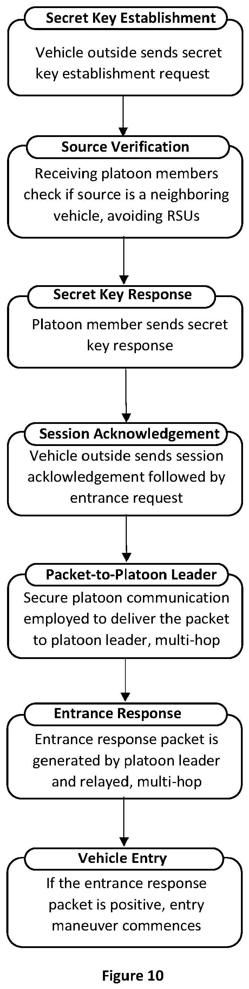

Fig. 10 demonstrates the flow diagram of a secure entrance maneuver according to the present invention.

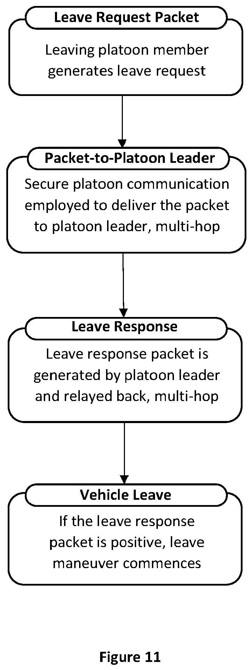

Fig. 11 demonstrates the flow diagram of a secure leave maneuver according to the present invention.

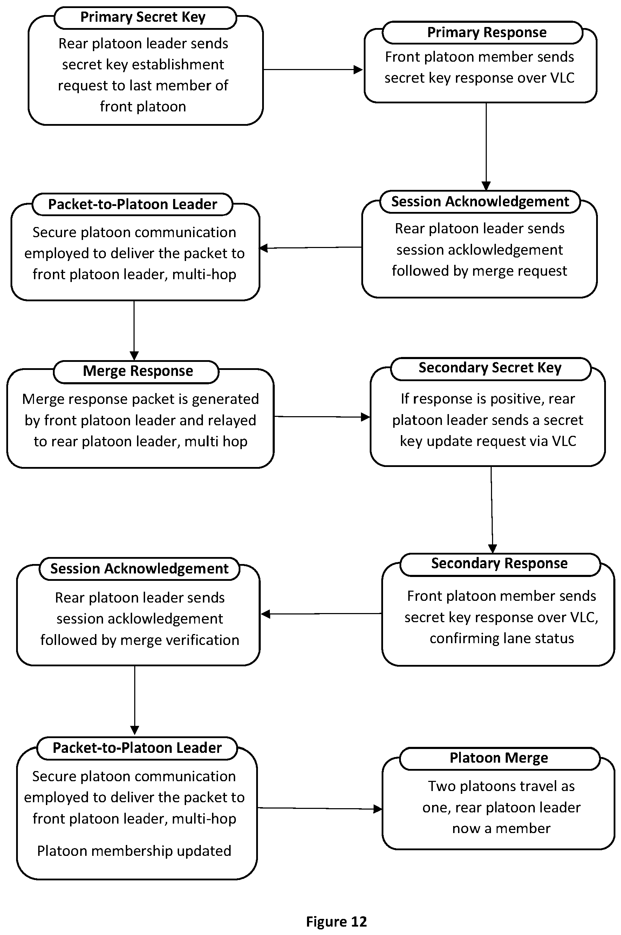

Fig. 12 demonstrates the flow diagram of a secure merge maneuver according to the present invention.

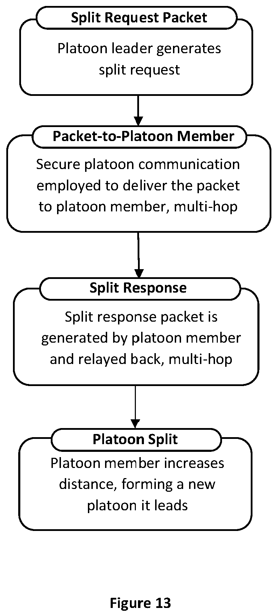

Fig. 13 demonstrates the flow diagram of a secure split maneuver according to the present invention.

### Detailed Description of the Present Invention

The following numerals are referred to in the detailed description of the present invention:
- 1.: Headlight
- 2.: VLC transmitter
- 3.: VLC subtransmitter
- 4.: VLC receiver
- 5.: Front bumper guard
- 6.: Fog lamp
- 7.: Wing mirror
- 8.: Taillight
- 9.: Rear bumper guard
- 10.: Leading vehicle
- 11.: Following vehicle
- 12.: VLC beam
- 13.: Platoon lane
- 14.: Free lane
- 15.: Platoon leader
- 16.: Receiving vehicle
- 17.: Requesting vehicle
- 18.: Headlight VLC beam
- 19.: Taillight VLC beam

The present invention discloses an autonomous vehicle platoon possessing IEEE 802.11p and VLC based hybrid security protocol for platoon communication and maneuvering, namely SP-VLC (Secure Platooning with Visible Light Communication), with the goal of ensuring platoon stability and securing platoon maneuvers under potential cases of data packet forgery, data packet replay, jamming and platoon maneuver attacks coming from malicious entities. Such a platoon maneuver attack may be based on the identification of various scenarios where a fake maneuver request or a fake maneuver response packet is transmitted by a malicious actor from outside of the platoon. Against this; SP-VLC includes mechanisms for secret key establishment and periodic update via VLC to ensure the participation of only the target vehicle in communication; message authentication to ensure packet integrity; data transmission over both IEEE 802.11p and VLC to exploit their advantageous complementary propagation characteristics while incorporating the encryption and decryption of the packets using the secret key generated between consecutive platoon members; jamming detection and reaction to switch to VLC-only communication based on packet reception characteristics; and secure platoon maneuvering operations based on the aforementioned joint usage of IEEE 802.11p and VLC.

Autonomous platoons are composed of multiple vehicles successively lined up in close proximity, travelling at a designated speed along a lane; in the case of the proposed invention, it consists of vehicles possessing VLC-compatible headlights (1) and taillights (8) that are fitted with VLC transmitter (2), VLC subtransmitter (3) and VLC receiver (4) members for emitting and collecting visible light communication respectively, along with several parts that include further collecting members. Apart from individual vehicles, the smallest unit within which communication can take place is a vehicle dyad, composed of one leading vehicle (10) and one following vehicle (11), while one being an initiator and the other responder, including a VLC beam (12) that establishes the propagation of information between vehicles in both directions. As the platoon travels along its lane (13), a platoon leader (15) is the frontmost vehicle, all remaining vehicles line up behind which in a fashion that enables VLC propagation via headlight (18) and taillight (19) VLC beams; all the while retaining IEEE 802.11p wireless connection, which is the established standard for wireless access for vehicular environments, including VANETs.

Vehicle headlights (1) demonstrated in the present invention have been fitted with visible light communication (VLC) compatible lighting components that, next to forming a headlight beam (18), serve the regular purpose of illumination as well. With respect to the area of the headlight (1), at least one VLC transmitter (2) and at least one VLC subtransmitter (3) are centrally located; which are, according to one embodiment, spherical bodies with different diameters, with the diameter of said VLC transmitter (2) being greater than that of VLC subtransmitter (3). VLC receivers (4) have considerably smaller diameter, however, are numerous in size and are positioned towards the periphery of the headlight (1) in means of area. In one embodiment, five VLC receivers (4) exist at the engine block side of the headlight (1), whereas four VLC receivers (4) exist at the opposite edge. Thus, a form of a headlight (1) is envisioned to serve both ends of the data transmission process of visible light communication through, characterized by data rates of terabits.

Regarding the front of a member of the platoon, in addition to the headlights (1) are complementary structural enhancements. Immediately below headlights (1) are, in connection with the front bumper, a front bumper guard (5) originally designed to protect the vehicle front from impact. As part of the VLC compatibility, front bumper guard (5) is fitted with additional VLC receivers (4) facing the direction vehicle is travelling. In a typically preferred embodiment, there exist two front bumper guards (5) on either side of the front bumper, with several VLC receivers (4) attached thereon, in turn to fortify the physical integrity and reliability of the communication medium. In alternative embodiments, different numbers of VLC receivers (4) may be positioned on different parts of the front bumper for desired effect and experimental justifications.

In addition to headlights (1) and VLC receiver (4) including front bumper guard (5), different elements may also find placement in parts facing the front of the vehicle. One such embodiment discloses a fog lamp (6) in position towards the end of the front bumper, fitted with a VLC transmitter (2) to further reinforce communication. Furthermore, both sides of the vehicle have one wing mirror (7), outside surface of which are fitted with multiple VLC receiver (4) units, contributing to the extension of the communication range. Via combining these elements, a strong and reliable visible light communication (VLC) setting is realized for packet exchange with the vehicle followed. In different embodiments and adaptations of the system to different brands and models of automobiles, the number and position of VLC transmitters (2), subtransmitters (3) and receivers (4) may differ considering various design specifications of said automobiles, all the while aiming to retain channel integrity.

Vehicle taillights (8) demonstrated in the present invention are expectedly different in design for backward propagation, since headlight (1) and taillight (8) lamps have specialized structures for different purposes. Number of VLC transmitters (2) and VLC subtransmitters (3) together inside the taillight (8) unit are greater than that of headlight (1) unit, albeit still focused towards the center of the total area of taillight (8). In one embodiment, two VLC transmitters (2) are situated in proximity of the geometric center, in addition to which a greater number of VLC subtransmitter (3) members exist at the edges of the taillight (8) facing inward. Several VLC receiver (4) members are fitted at the opposing edges of the taillights (8), covering a greater span both in terms of vertical and horizontal extension compared to VLC transmitter (2) and subtransmitter (3) members due to the need of the latter to deliver a more focused taillight beam (19) with respect to their general strength and purpose of illumination.

The back side of the vehicle in question, in addition to the taillights (8) includes still complementary structural enhancements as the case with the front side. Situated below the taillights (8) is a rear bumper guard (9) which, as part of the VLC compatibility, is fitted with additional VLC receiver (4) members facing the opposite of the direction vehicle is travelling. In a typically preferred embodiment, there exist two rear bumper guards (9) on either side of the rear bumper, with at least four VLC receivers (4) attached thereon, in turn to increase the transmission reception potential. In alternative embodiments, different numbers of VLC receivers (4) may be positioned on different parts of the rear bumper for desired effect.

Complementarily, each vehicle in the platoon contains a specialized electronic controller unit (ECU) to implement platoon communication and management protocol, and keep the vehicle information base (VIB). ECU receives data from various sensors and VLC receiver (4) members; and sends data to VLC transmitters (2) and subtransmitters (3), as well as IEEE 802.11p connectivity structures. VLC transmitters (2), subtransmitters (3) and receivers (4) are placed on both the front and rear of the vehicle. As mentioned earlier, the transmission characteristics of taillights (8) and headlights (1) are different, resulting in asymmetric communication link between consecutive vehicles. Multiple VLC receiver (4) members on the front and rear of the vehicle are used to enable the determination of the direction of transmission: Vehicle hardware is able to ascertain whether the transmitting unit is on the road side, in the same lane or in the next lane by comparing the intensity of the received light at each VLC receiver (4) member.

The communication and operation protocol of the present invention, SP-VLC, standing for "Secure Platooning with Visible Light Communication", includes mechanisms for secret key establishment and periodic update using VLC to ensure the participation of only directional target vehicle in communication; authentication using message authentication code to ensure the integrity of the packets; data transmission over both IEEE 802.11p and VLC incorporating the encryption and decryption of the packets using the secret key generated between consecutive platoon members in the vehicle platoon to exploit the complementary propagation characteristics of data transmission over these protocols; jamming detection and switching to VLC-only communication based on packet reception characteristics; and platoon operations such as secure maneuvering based on the joint usage of IEEE 802.11p and VLC while exploiting the directionality, limited range and innate impermeability properties of VLC and larger transmission range of IEEE 802.11p.

Diffie-Hellman (DH) method is adopted in the secret key establishment and update mechanism. The initial secret key is needed for the communication between a vehicle that intends to enter the platoon and one of the platoon members, or a vehicle that has just entered the platoon and the preceding and following vehicles. Pair of consecutive platoon members, initiator and responder, starts to establish a secret key by the choice of secret values a and b respectively, that are both less than p - 1, where p is conventionally a large prime number. The initiator and responder then compute secret key initiation X and secret key response Y based on g, respectively, and send these values to each other, where g is a primitive root modulo p. The same secret key is then computed at the initiator and responder and stored in the vehicle information base (VIB) of the vehicle for future packet exchange with the corresponding neighboring vehicle. Platoon members keep separate secret keys for the following and preceding vehicle.

The following vehicle (11), which is the initiator, triggers the secret key establishment upon sending secret key initiation packet through computing and sharing value X with the leading vehicle (10), which is the receiver, via VLC. After the sharing of X, following vehicle (11) waits for a secret key response, Y, from the leading vehicle (10) which may send said secret key response multiple times. While secret key response value Y is received within the predefined amount of time i.e. session time, following vehicle (11) computes the secret key and sends session acknowledgement packet, which includes a unique sequence identifier of the secret key session used to ensure that both following (11) and leading (10) vehicles agree on the same secret key. Once the following vehicle (11) is positive that the session acknowledgement packet is received successfully, it updates its local vehicle information base (VIB) and uses secret key in the encoding process of the packets that follow.

The responder side of secret key establishment takes place as follows: leading vehicle (10) triggers the secret key establishment upon receiving secret key initiation packet from the following vehicle (11). Next up, the leading vehicle (10) independently computes the secret key and sends secret key response value, Y, to the following vehicle (11); which as mentioned before can occur numerous times: While the following vehicle"s (11) session acknowledgement packet is yet to be received within a predetermined session time, the leading vehicle (10) keeps sending the secret key response packet, Y, to the following vehicle (11). If session acknowledgement from the initiating vehicle (11) is received, then responding vehicle (10) updates its local vehicle information base (VIB) and uses new secret key in the encoding process of the packets that follow.

The message authentication step of the protocol is achieved via Cipher-based Message Authentication Code (CMAC). CMAC is a block cipher-based authentication algorithm, where both the integrity and authenticity of a message are verified together using its ingredients. CMAC works in three parts, namely identical key generation, signing and verification. In key generation, cipher-based message authentication code (CMAC) adopts the secret key that is established in the previous step, which uitilizes Diffie-Hellman method. In the next step of signing, a tag is generated by using the secret key, vehicle identifier, platoon identifier and packet sequence number values, following which the tag is appended to the packet. In the verification step, the receiver verifies the authenticity of the packet by following three steps described below.

The packet is fed as input to the decryption function together with the secret key, as the output of which the packet gets decoded with contents returned if and only if the packet is encrypted with the current secret key; failure of which causes the packet to be rejected. Once the packet is decrypted, the receiver reproduces the tag by using the content of the received packet and current secret key. If locally reproduced and piggybacked, i.e. delivered tags are not identical then the packet is rejected. The receiver compares the expected and received packet sequence numbers, in the failure of which being identical, packet is rejected yet still.

The exchange of vehicle platoon data packets between consecutive vehicle pairs/dyads in the platoon requires the insertion of CMAC and encryption by using secret key at the sender end and decryption by using the same secret key and verification of CMAC at the receiver end. Vehicle platoon data packet is generated by the platoon leader periodically and forwarded consecutively by each platoon member to the following vehicle, resulting in what is known as multiple hop data dissemination: The secure platoon communication is triggered upon reception of an encrypted platoon data. Said platoon data consists of platoon identifier, platoon depth, lane identifier, sequence number, acceleration, speed, position, sender address of the packet transmitter and is periodically transmitted from the leader to the followers.

Next, the platoon member retrieves the secret key corresponding to the source of the received packet from vehicle information base (VIB) and decrypts the packet using this secret key. After decryption, platoon data is then authenticated by using its own content, including platoon unique identifier, vehicle unique identifier and unique packet sequence number, and secret key through the verification step described previously in detail in message authentication mechanism. If the packet is authenticated, then the vehicle updates its vehicle information base using the received platoon data and generates new platoon data packet for transmission to the following vehicle. Once ready, the new platoon data is then signed and encrypted for transmission over both VLC and IEEE 802.11p

When conceived together, message authentication and data transmission methods, details of which are as laid above, it is ensured that messages are delivered solely in spatial order, meaning a verification and transmission may only occur between successive vehicles and in a particular direction: In the specific step of message verification, CMAC method takes advantage of the packet-specific nature of communication between successive vehicles, whereas the sequential nature of the autonomous vehicle platoon collaborates to packet delivery in the sense that the directionality of transmission is assured through the threefold verification step; a consequence of which is the platoon leader (15) being the only member capable of changing the direction of transmission. Subject to this, vehicles inside the autonomous platoon interact with one another and possible vehicles outside the platoon, according to which different maneuvers are executed, four of which are to be further elaborated hereinafter.

Platoon entrance maneuver displays a case when a new vehicle, a requesting vehicle (17) travelling on the free lane (14) intends to enter the platoon, during which following steps are executed: A secret key establishment packet is sent to the platoon members via VLC. This enables the reception of the packet by the neighboring vehicles, in any case being a receiving vehicle (16) within VLC range only, while avoiding the reception by the malicious actors on the side of the road. The platoon member(s) that receive(s) the secret key establishment packet prior to entrance request over VLC check whether the source of the packet is a roadside unit (RSU), or a vehicle traveling on the free lane (14). If the source is a vehicle on the free lane (14), these platoon members send a secret key response packet; otherwise, they ignore the packet.

The requesting vehicle (17) waits until reception of the first secret key response to arrive from a platoon member that is the receiving vehicle (16), following which a session acknowledgement packet and subsequently an entrance request packet encrypted by the use of the secret key are sent to the platoon's receiving vehicle (16) over the headlight VLC beam (18). The platoon member, receiving vehicle (16), acquiring encrypted entrance request packet decrypts the packet and encrypts it with the secret key of the preceding vehicle in the platoon and sends it to that vehicle over both channels. Upon reception of the encrypted entrance request packet, each platoon member decrypts the packet with the secret key of the following vehicle, encrypts the packet with the secret key of the preceding vehicle in the platoon and sends it over both channels still, which continues until the request reaches the platoon leader; constituting multiple hop transmission. Upon reception of entrance request packet, platoon leader (15) generates and sends the entrance response packet by using encryption/decryption mechanism over both channels in multiple hops. If entrance response is positive, entrance operation commences. The platoon members increase their inter-vehicular distance so that the requesting vehicle (17) can steer to the platoon lane (13).

Platoon leave maneuver is operated as follows: When a platoon member wants to leave the platoon, it sends leave request packet to the platoon leader (15) over multi-hops. Upon reception of a platoon leave request, the platoon leader (15) generates and sends platoon leave response packet to the initiating vehicle. If leave response is positive, the driver takes control of the corresponding vehicle in order to exit from platoon lane (13). Leave request and response packets are transmitted over multiple hops by using encryption/decryption mechanism over both channels between consecutive vehicles in the platoon.

Platoon merge maneuver is operated as follows: Merge operation is performed if the total size of two consecutive platoons traveling on the same lane (13) is less than or equal to a designated optimal platoon size. As long as the number of vehicles in a platoon is less than the optimal size, the platoon leader initiates a merge request to the preceding platoon periodically. In case of a positive merge response, the platoon leader of the following platoon decreases the space to the preceding platoon, becoming a member of the preceding platoon. Since the distance between these two platoons may be larger than VLC transmission range, it is possible that the merge request packet may only reach the preceding platoon members over IEEE 802.11p. Therefore, an additional merge justification stage following the merge process is included to ensure the secure communication over VLC. The following message exchanges are performed during the merging of two platoons:
Leader of the rear platoon sends a secret key establishment packet to the last vehicle of the front platoon over both channels, considering the range of VLC may not be large enough to reach any member of the preceding (front) platoon. Rear platoon leader waits for a certain time duration for the reception of secret key response packet from the last vehicle of the front platoon. If multiple secret key response packets are received, the platoon leader ignores them all. Conversely if there exists only one secret key response packet received over VLC, session acknowledgement packet is delivered over VLC, followed by a merge request packet sent over both channels by using encryption mechanism to the corresponding platoon member; otherwise, session acknowledgement packet and merge request packet are sent to the source of secret key response packet over IEEE 802.11p only. The merge request packet is transmitted to the platoon leader (15) of the preceding platoon over multiple hops by using encryption/decryption mechanism over both channels, upon reception of which the platoon leader generates a merge response packet that is positive if the total number of vehicles in both platoons is less than or equal to optimal size, and negative otherwise. However, the platoon leader (15) does not update platoon membership until it receives a merge justification message. Merge response packet is transmitted to the platoon leader (15) of the rear platoon over multiple hops by using encryption/decryption mechanism over both channels yet again. If merge response is positive, the platoon leader (15) of the rear platoon decreases its distance to the preceding platoon, and sends a secret key update packet to the last vehicle of the front platoon via VLC. If the last vehicle of the front platoon determines that the source of the secret initiation packet travels on the same lane, it responds with a secret key response packet which, if is received from a vehicle traveling on the same lane, prompts the leader of the rear platoon send session ackniowledgement packet and merge verification message encrypted using the corresponding secret key to the last vehicle of the front platoon. This merge verification request is then transmitted to the platoon leader (15) over multiple hops by using encryption/decryption mechanism over both channels. Platoon leader (15) updates the membership view of the platoon only after receiving merge verification request message and reciprocates with merge verification response packet. Merge verification response message is sent back over multiple hops. Upon reception of merge verification response packet, the platoon leader (15) of the rear platoon becomes a regular member of the front platoon along with all its members.

Platoon split maneuver is operated as follows: Split operation refers to separating the platoon at a specific position to form two smaller platoons in the case when the platoon size is larger than optimal size, or when a platoon member decides to leave at a given time. The optimal platoon size depends on the road status, according to which the leader may decide to split the platoon if the road-allowed optimal size is less than the current platoon size. Conversely, when a platoon member is approaching its destination, it initiates a leave request; afterwards inducing leave maneuver to be performed by a sequence of split and merge maneuvers.

Similar to merge, the split operation is coordinated by the platoon leader (15). The platoon leader (15) sends a split request packet to the platoon member from which the split needs to be initiated. The corresponding vehicle acknowledges the receipt of the split request packet by transmitting split response packet. The splitting platoon member then increases the distance to the preceding vehicle, forming a new platoon together with the following vehicles. These request and response packets are transmitted over multiple hops by using SP-VLC encryption/decryption mechanism over both VLC and IEEE 802.11p between consecutive vehicles in the platoon.

In a nutshell, the present invention proposes a secure autonomous platoon comprising at least two vehicles, headlights (1) and taillights (8) of each fitted with at least one VLC transmitter (2), VLC subtransmitter (3) and VLC receiver (4) units; said vehicles being in successive formation with one platoon leader (15) on the forefront, and between every vehicle dyad a VLC beam (12) ensures communication; through which distinct maneuvering schemes are handled over a hybrid security protocol over both VLC and IEEE 802.11p that includes distinct steps of secret key establishment and update, message authentication and data transmission.

In one aspect of the present invention, an autonomous vehicle platoon, comprising at least two vehicles, headlights (1) and taillights (8) of each fitted with at least one VLC transmitter (2), VLC subtransmitter (3) and VLC receiver (4) is proposed.

In another aspect of the present invention, said vehicles are in successive formation with one platoon leader (15) on the forefront, any vehicle dyad being composed of one leading vehicle (10) and one following vehicle (11) between which a VLC beam (12) communication exists by which distinct maneuvering schemes are handled over a hybrid security protocol over both VLC and IEEE 802.11p.

In a further aspect of the present invention, said platoon security protocol includes separate steps of secret key establishment and update; message authentication and data transmission.

In a further aspect of the present invention, said distinct maneuvering schemes include platoon entrance, platoon leave, platoon merge and platoon split.

In a further aspect of the present invention, said secret key establishment step includes a Diffie-Hellman key exchange.

In a further aspect of the present invention, a method of communication between members of an autonomous vehicle platoon is proposed.

In a further aspect of the present invention, said method of communication between members of an autonomous vehicle platoon includes distinct steps of secret key establishment and update, where Diffie-Hellman key exchange takes place within a vehicle dyad composed of initiator and responder, or alternatively receiving (16) and requesting (17) vehicles; message authentication, where block cipher-based message authentication code is utilized to validate both integrity and authenticity of messages delivered; and data transmission, where secure communication is ensured between vehicles and involves multi-hop delivery of a data packet periodically issued by the platoon leader (15).

In a further aspect of the present invention, said message authentication step comprises distinct steps of; key generation, where the secret key established in the previous step is adopted; message signing, where a tag is generated by using secret key, vehicle ID, platoon ID and packet sequence number which is appended to data packet; and message verification, where a threefold scheme is implemented to verify the authenticity of the packet received.

In a further aspect of the present invention, said message verification step comprises three further steps of; secret key decoding, where it is checked whether if the received packet is encrypted with the current secret key; tag comparation, where the tag is reproduced and compared to the one attached on the packet received; and sequence number comparation, where expected and received packet sequence numbers are compared.

In a further aspect of the present invention, said message verification step authentication of said packet is acknowledge only if all steps are positively executed, conversely which it is tossed.

In a further aspect of the present invention, data transmission part includes further steps of; message authentication, where received packet is decrypted and authenticated, in the failure of which it is rejected; update of vehicle information base including platoon info, where contents of received packet is used to update aforementioned data regarding the platoon, locally stored in vehicle; new data packet generation, where a packet is formed using updated information base for transmission; and signing and encryption, where the new data packet is signed and encrypted for transmission to other vehicle(s).

In a further aspect of the present invention, platoon entrance maneuver includes steps of secret key establishment; source verification, where receiving vehicle(s) (16) check if the packet has arrived from another vehicle on a free lane (14) and not a roadside unit (RSU); secret key response sending; session acknowledgement, where the vehicle outside sends a session acknowledgement packet and an entrance request back-to-back; packet delivery to platoon leader, where the entrance request packet is delivered to platoon leader (15) in multi-hop transmission; entrance response generation, where platoon leader (15) generates a response packet and relays to receiving vehicle (16) in multi-hop transmission; and vehicle entry, where maneuver commences and vehicles increase distance for requesting vehicle (17) to join the platoon.

In a further aspect of the present invention, platoon leave maneuver includes steps of leave request packet generation, where a vehicle intending to leave the platoon generates a leave request; packet delivery to platoon leader; leave response generation, where platoon leader (15) generates a response packet and relays to receiving vehicle (16) in multi-hop transmission; and vehicle leave, where leave maneuver commences and driver takes control of the vehicle to leave the platoon.

In a further aspect of the present invention, platoon merge maneuver between a front and a rear platoons includes steps of primary secret key establishment, where the leader of the rear platoon sends a secret key establishment request to last member of the front platoon; primary secret key response sending; primary session acknowledgement, where rear platoon leader sends session acknowledgement and a merge request packet back-to-back; packet delivery to platoon leader; merge response generation, where front platoon leader generates a response packet and relays to last platoon member in multi-hop transmission; secondary secret key establishment, where if merge response is positive, rear platoon leader sends a secret key update request via VLC; secondary secret key response sending; secondary session acknowledgement where rear platoon leader sends session acknowledgement and a merge verification packet back-to-back; packet delivery to platoon leader; and platoon merge, where rear platoon leader (15) becomes a member along with its followers.

In a further aspect of the present invention, platoon split maneuver includes steps of; split request packet generation, where a platoon leader (15) generates generates a leave request; packet delivery to platoon member, where the split request packet is relayed to a designated platoon member, multi-hop; split response generation, where platoon member generates a split response packet, which is relayed back with multi-hop transmission; and platoon split, where split maneuver commences and designated platoon member becomes the leader of a new platoon.

## Claims

1. An autonomous vehicle platoon, comprising at least two vehicles, headlights (1) and taillights (8) of each fitted with at least one VLC transmitter (2), VLC subtransmitter (3) and VLC receiver (4), said vehicles being in successive formation with one platoon leader (15) on the forefront, any vehicle dyad, of said at least two vehicles, being composed of one leading vehicle (10) and one following vehicle (11) between which a Visual Light Communication, VLC, beam (12) communication as well as an IEEE 802.11p communication exists, wherein
each of said at least two vehicles comprise an IEEE 802.11p connectivity structure for said IEEE 802.11p communication,
each of said at least two vehicles comprise a specialized electric controller unit (ECU)
said specialized ECU is configured to receive data from said at least one VLC transmitter (2), VLC subtransmitter (3) and a VLC receiver (4) as well as said IEEE 802.11p connectivity structure,
said specialized ECU is further configured to keep a vehicle information base and implement a platoon communication and management protocol, whereby
each of said at least two vehicles establish a secret key using a Diffie-Hellman key exchange between said leading vehicle (10) and said following vehicle (11) of said any vehicle dyad over the VLC beam communication, and store said secret key in said vehicle information base,
each of said at least two vehicles authenticate, by using said secret key, at least one message received over the VLC beam communication and the IEEE 802.11p communication, wherein a cipher-based message authentication code is used and store contents of said at least one authenticated message, pertaining to platoon information in said vehicle information base;
wherein secure communication is ensured between the members of said vehicle platoon and involves multi-hop delivery of said at least one message periodically issued by the platoon leader via data transmission over the VLC beam communication and the IEEE 802.11p communication.

2. A method of communication between members, comprising a platoon leader, of an autonomous vehicle platoon whereby different maneuvers of entrance, leave, merge and split are executed, the method comprising the distinct steps of:
secret key establishment and update over Visual Light Communication, VLC, where Diffie-Hellman key exchange takes place within a vehicle dyad, of said vehicle platoon, composed of initiator and responder, or alternatively receiving (16) and requesting (17) vehicles;
message authentication, by using said secret key, over the VLC and IEEE 802-11p communication, where block cipher-based message authentication code is utilized to validate both integrity and authenticity of messages received between vehicles of said vehicle dyad;
and data transmission over the VLC and the IEEE 802.11p communication, where secure communication is ensured between the members of said vehicle platoon and involves multi-hop delivery of said messages periodically issued by the platoon leader (15) via data transmission over the VLC and the IEEE 802.11p communication.

3. A method of communication between members of an autonomous platoon as set forth in Claim 2, **characterized in that** said message authentication step comprises distinct steps of;
key generation, where the secret key established in the previous step is adopted;
message signing, where a tag is generated by using the secret key, vehicle ID, platoon ID and packet sequence number which is appended to a message;
and message verification, where a threefold scheme is implemented to verify the authenticity of the message received.

4. A method of communication between members of an autonomous platoon as set forth in Claim 3, **characterized in that** said threefold scheme in said message verification step comprises three further steps of;
secret key decoding, where it is checked whether if the received message is encrypted with the current secret key;
tag comparation, where the tag is reproduced and compared to the one appended on the message received;
and sequence number comparation, where expected and received message sequence numbers are compared.

5. A method of communication between members of an autonomous platoon as set forth in Claim 3 or 4, **characterized in that** said message verification step authentication of said message is acknowledge only if all steps are positively executed, conversely which it is tossed.

6. A method of communication between members of an autonomous platoon as set forth in Claim 2, **characterized in that** data transmission part includes further steps of;
message authentication, where the received message is decrypted and authenticated, in the failure of which it is rejected;
update of the vehicle information base including the platoon info, where contents of the received message is used to update aforementioned data regarding the platoon, locally stored in the vehicle information base;
new data packet generation, where a message is formed using updated data in the vehicle information base for transmission;
and signing and encryption, where the new message is signed and encrypted for transmission to other vehicle(s).

7. A method of communication between members of an autonomous platoon as in Claim 2, **characterized in that** platoon entrance maneuver includes steps of;
secret key establishment;
source verification, where receiving vehicle(s) (16) check if the message has arrived from another vehicle on a free lane (14) and not a roadside unit (RSU);
secret key response sending;
session acknowledgement, where the other vehicle sends a session acknowledgement packet and an entrance request back-to-back;
packet delivery to platoon leader, where the entrance request is delivered to platoon leader (15) in multi-hop transmission;
entrance response generation, where platoon leader (15) generates a response message and relays to receiving vehicle (16) in multi-hop transmission;
and vehicle entry, where maneuver commences and vehicles increase distance for requesting vehicle (17) to join the platoon.

8. A method of communication between members of an autonomous platoon as set forth in Claim 2, **characterized in that** platoon leave maneuver includes steps of;
leave request packet generation, where a vehicle intending to leave the platoon generates a leave request;
packet delivery to the platoon leader;
leave response generation, where platoon leader (15) generates a response message and relays to receiving vehicle (16) in multi-hop transmission;
and vehicle leave, where leave maneuver commences and driver takes control of the vehicle to leave the platoon.

9. A method of communication between two autonomous platoons as set forth in Claim 2, **characterized in that** platoon merge maneuver between a front and a rear platoons includes steps of;
primary secret key establishment, where leader of the rear platoon sends a secret key establishment request to last member of the front platoon;
primary secret key response sending;
primary session acknowledgement, where the rear platoon leader sends session acknowledgement and a merge request message back-to-back;
packet delivery to platoon leader;
merge response generation, where front platoon leader generates a response packet and relays to last platoon member in multi-hop transmission;
secondary secret key establishment, where if merge response is positive, the rear platoon leader sends a secret key update request via the VLC;
secondary secret key response sending;
secondary session acknowledgement where the rear platoon leader sends session acknowledgement and a merge verification packet back-to-back;
packet delivery to the front platoon leader;
and platoon merge, where the rear platoon leader becomes a member along with its followers.

10. A method of communication between members of an autonomous platoon as set forth in Claim 2, **characterized in that** platoon split maneuver includes steps of;
split request packet generation, where the platoon leader (15) generates generates a leave request;
packet delivery to a platoon member, where the split request packet is relayed to a designated platoon member, multi-hop;
split response generation, where platoon member generates a split response packet, which is relayed back with multi-hop transmission;
and platoon split, where split maneuver commences and the designated platoon member becomes the leader of a new platoon.

## Patentansprüche

1. Autonomer Fahrzeugverband, umfassend mindestens zwei Fahrzeuge,
wobei die Scheinwerfer (1) und die Rückleuchten (8) eines jeden Fahrzeugs mit mindestens einem VLC-Sender (2), einem VLC-Subsender (3) und einem VLC-Empfänger (4) ausgestattet sind, wobei die Fahrzeuge in einer aufeinanderfolgenden Formation mit einem Führungsfahrzeug (15) an der Spitze angeordnet sind, wobei ein beliebiges Fahrzeugpaar der mindestens zwei Fahrzeuge aus einem vorausfahrenden Fahrzeug (10) und einem nachfolgenden Fahrzeug (11) besteht, zwischen denen sowohl eine Kommunikation über einen Strahl (12) zur Kommunikation mit sichtbarem Licht, VLC, als auch eine IEEE-802.11p-Kommunikation besteht, wobei
jedes der mindestens zwei Fahrzeuge eine IEEE-802.11p-Konnektivitätsstruktur für die IEEE-802.11p-Kommunikation umfasst,
jedes der mindestens zwei Fahrzeuge eine spezialisierte elektronische Steuereinheit (ECU) umfasst,
die spezialisierte ECU dazu konfiguriert ist, Daten von dem mindestens einen VLC-Sender (2), dem VLC-Subsender (3) und dem VLC-Empfänger (4) sowie von der IEEE-802.11p-Konnektivitätsstruktur zu empfangen,
die spezialisierte ECU ferner dazu konfiguriert ist, eine Fahrzeuginformationsbasis zu führen und ein Kommunikations- und Verwaltungsprotokoll für den Fahrzeugverband zu implementieren, wodurch
jedes der mindestens zwei Fahrzeuge mittels eines Diffie-Hellman-Schlüsselaustauschs zwischen dem vorausfahrenden Fahrzeug (10) und dem nachfolgenden Fahrzeug (11) des Fahrzeugpaars über die VLC-Strahlkommunikation einen geheimen Schlüssel aufbaut und den geheimen Schlüssel in der Fahrzeuginformationsbasis speichert,
jedes der mindestens zwei Fahrzeuge mittels des geheimen Schlüssels mindestens eine über die VLC-Strahlkommunikation und die IEEE-802.11p-Kommunikation empfangene Nachricht authentifiziert, wobei ein chiffrierbasierter Nachrichtenauthentifizierungscode verwendet wird, und den auf Informationen über den Fahrzeugverband bezogenen Inhalt der mindestens einen authentifizierten Nachricht in der Fahrzeuginformationsbasis speichert;
wobei eine sichere Kommunikation zwischen den Mitgliedern des Fahrzeugverbands gewährleistet ist und eine Multi-Hop-Weiterleitung der mindestens einen Nachricht umfasst, die von dem Führungsfahrzeug periodisch über eine Datenübertragung mittels der VLC-Strahlkommunikation und der IEEE-802.11p-Kommunikation ausgegeben wird.

2. Verfahren zur Kommunikation zwischen Mitgliedern eines autonomen Fahrzeugverbands, der ein Führungsfahrzeug umfasst, wobei verschiedene Manöver zum Beitreten, Austreten, Zusammenführen und Aufteilen ausgeführt werden, wobei das Verfahren die folgenden einzelnen Schritte umfasst:
Aufbauen und Aktualisieren eines geheimen Schlüssels über eine Kommunikation mit sichtbarem Licht, VLC, wobei ein Diffie-Hellman-Schlüsselaustausch innerhalb eines Fahrzeugpaars des Fahrzeugverbands stattfindet, das aus einem Initiator und einem Responder oder alternativ aus einem empfangenden Fahrzeug (16) und einem anfordernden Fahrzeug (17) besteht;
Authentifizieren einer Nachricht mittels des geheimen Schlüssels über die VLC- und die IEEE-802.11p-Kommunikation, wobei ein blockchiffrierbasierter Nachrichtenauthentifizierungscode verwendet wird, um sowohl die Integrität als auch die Authentizität von zwischen den Fahrzeugen des Fahrzeugpaars empfangenen Nachrichten zu validieren;
und Übertragen von Daten über die VLC- und die IEEE-802.11p-Kommunikation, wobei eine sichere Kommunikation zwischen den Mitgliedern des Fahrzeugverbands gewährleistet ist und eine Multi-Hop-Weiterleitung der Nachrichten umfasst, die von dem Führungsfahrzeug (15) periodisch über eine Datenübertragung mittels der VLC- und der IEEE-802.11p-Kommunikation ausgegeben werden.

3. Verfahren zur Kommunikation zwischen Mitgliedern eines autonomen Fahrzeugverbands nach Anspruch 2, **dadurch gekennzeichnet, dass** der Schritt des Authentifizierens einer Nachricht die folgenden einzelnen Schritte umfasst:
Erzeugen eines Schlüssels, wobei der im vorhergehenden Schritt aufgebaute geheime Schlüssel übernommen wird;
Signieren einer Nachricht, wobei mittels des geheimen Schlüssels, einer Fahrzeug-ID, einer Fahrzeugverbands-ID und einer Paketsequenznummer ein Tag erzeugt und an eine Nachricht angehängt wird;
und Verifizieren der Nachricht, wobei ein dreistufiges Schema implementiert wird, um die Authentizität der empfangenen Nachricht zu verifizieren.

4. Verfahren zur Kommunikation zwischen Mitgliedern eines autonomen Fahrzeugverbands nach Anspruch 3, **dadurch gekennzeichnet, dass** das dreistufige Schema in dem Schritt des Verifizierens einer Nachricht die folgenden drei weiteren Schritte umfasst:
Decodieren des geheimen Schlüssels, wobei geprüft wird, ob die empfangene Nachricht mit dem aktuellen geheimen Schlüssel verschlüsselt ist;
Vergleichen von Tags, wobei der Tag reproduziert und mit dem an die empfangene Nachricht angehängten Tag verglichen wird;
und Vergleichen von Sequenznummern, wobei eine erwartete Nachrichtensequenznummer und eine empfangene Nachrichtensequenznummer miteinander verglichen werden.

5. Verfahren zur Kommunikation zwischen Mitgliedern eines autonomen Fahrzeugverbands nach Anspruch 3 oder 4, **dadurch gekennzeichnet, dass** die Authentifizierung der Nachricht in dem Schritt des Verifizierens einer Nachricht nur dann bestätigt wird, wenn sämtliche Schritte erfolgreich ausgeführt werden, wobei die Nachricht andernfalls verworfen wird.

6. Verfahren zur Kommunikation zwischen Mitgliedern eines autonomen Fahrzeugverbands nach Anspruch 2, **dadurch gekennzeichnet, dass** der Datenübertragungsteil ferner die folgenden Schritte umfasst:
Authentifizieren einer Nachricht, wobei die empfangene Nachricht entschlüsselt und authentifiziert und im Fall eines Fehlschlags verworfen wird;
Aktualisieren der Fahrzeuginformationsbasis einschließlich der Informationen über den Fahrzeugverband, wobei der Inhalt der empfangenen Nachricht verwendet wird, um die vorgenannten, den Fahrzeugverband betreffenden und lokal in der Fahrzeuginformationsbasis gespeicherten Daten zu aktualisieren;
Erzeugen eines neuen Datenpakets, wobei unter Verwendung aktualisierter Daten in der Fahrzeuginformationsbasis eine Nachricht zur Übertragung gebildet wird;
und Signieren und Verschlüsseln der neuen Nachricht zur Übertragung an ein oder mehrere andere Fahrzeuge.

7. Verfahren zur Kommunikation zwischen Mitgliedern eines autonomen Fahrzeugverbands nach Anspruch 2, **dadurch gekennzeichnet, dass** das Beitrittsmanöver zu dem Fahrzeugverband die folgenden Schritte umfasst:
Aufbauen eines geheimen Schlüssels;
Verifizieren der Quelle, wobei das empfangende Fahrzeug beziehungsweise die empfangenden Fahrzeuge (16) prüft beziehungsweise prüfen, ob die Nachricht von einem anderen Fahrzeug auf einer freien Fahrspur (14) und nicht von einer straßenseitigen Einheit (RSU) stammt;
Senden einer Antwort bezüglich des geheimen Schlüssels;
Bestätigen der Sitzung, wobei das andere Fahrzeug unmittelbar nacheinander ein Sitzungsbestätigungspaket und eine Beitrittsanforderung sendet;
Weiterleiten des Pakets an das Führungsfahrzeug, wobei die Beitrittsanforderung mittels einer Multi-Hop-Übertragung an das Führungsfahrzeug (15) weitergeleitet wird;
Erzeugen einer Beitrittsantwort, wobei das Führungsfahrzeug (15) eine Antwortnachricht erzeugt und mittels einer Multi-Hop-Übertragung an das empfangende Fahrzeug (16) weiterleitet;
und Beitreten des Fahrzeugs, wobei das Manöver beginnt und die Fahrzeuge ihren Abstand vergrößern, damit das anfordernde Fahrzeug (17) dem Fahrzeugverband beitreten kann.

8. Verfahren zur Kommunikation zwischen Mitgliedern eines autonomen Fahrzeugverbands nach Anspruch 2, **dadurch gekennzeichnet, dass** das Austrittsmanöver aus dem Fahrzeugverband die folgenden Schritte umfasst:
Erzeugen eines Austrittsanforderungspakets, wobei ein Fahrzeug, das aus dem Fahrzeugverband auszutreten beabsichtigt, eine Austrittsanforderung erzeugt;
Weiterleiten des Pakets an das Führungsfahrzeug;
Erzeugen einer Austrittsantwort, wobei das Führungsfahrzeug (15) eine Antwortnachricht erzeugt und mittels einer Multi-Hop-Übertragung an das empfangende Fahrzeug (16) weiterleitet;
und Austreten des Fahrzeugs, wobei das Austrittsmanöver beginnt und der Fahrer die Steuerung des Fahrzeugs übernimmt, um den Fahrzeugverband zu verlassen.

9. Verfahren zur Kommunikation zwischen zwei autonomen Fahrzeugverbänden nach Anspruch 2, **dadurch gekennzeichnet, dass** das Zusammenführungsmanöver zwischen einem vorderen und einem hinteren Fahrzeugverband die folgenden Schritte umfasst:
Aufbauen eines primären geheimen Schlüssels, wobei das Führungsfahrzeug des hinteren Fahrzeugverbands eine Anforderung zum Aufbau eines geheimen Schlüssels an das letzte Mitglied des vorderen Fahrzeugverbands sendet;
Senden einer Antwort bezüglich des primären geheimen Schlüssels;
Bestätigen der primären Sitzung, wobei das Führungsfahrzeug des hinteren Fahrzeugverbands unmittelbar nacheinander eine Sitzungsbestätigung und eine Nachricht mit einer Zusammenführungsanforderung sendet;
Weiterleiten des Pakets an das Führungsfahrzeug;
Erzeugen einer Zusammenführungsantwort, wobei das Führungsfahrzeug des vorderen Fahrzeugverbands ein Antwortpaket erzeugt und mittels einer Multi-Hop-Übertragung an das letzte Mitglied des Fahrzeugverbands weiterleitet;
Aufbauen eines sekundären geheimen Schlüssels, wobei das Führungsfahrzeug des hinteren Fahrzeugverbands bei positiver Zusammenführungsantwort eine Anforderung zur Aktualisierung des geheimen Schlüssels über VLC sendet;
Senden einer Antwort bezüglich des sekundären geheimen Schlüssels;
Bestätigen der sekundären Sitzung, wobei das Führungsfahrzeug des hinteren Fahrzeugverbands unmittelbar nacheinander eine Sitzungsbestätigung und ein Zusammenführungsverifizierungspaket sendet;
Weiterleiten des Pakets an das Führungsfahrzeug des vorderen Fahrzeugverbands;
und Zusammenführen der Fahrzeugverbände, wobei das Führungsfahrzeug des hinteren Fahrzeugverbands zusammen mit seinen nachfolgenden Fahrzeugen zu einem Mitglied wird.

10. Verfahren zur Kommunikation zwischen Mitgliedern eines autonomen Fahrzeugverbands nach Anspruch 2, **dadurch gekennzeichnet, dass** das Aufteilungsmanöver des Fahrzeugverbands die folgenden Schritte umfasst:
Erzeugen eines Aufteilungsanforderungspakets, wobei das Führungsfahrzeug (15) eine Austrittsanforderung erzeugt;
Weiterleiten des Pakets an ein Mitglied des Fahrzeugverbands, wobei das Aufteilungsanforderungspaket mittels einer Multi-Hop-Übertragung an ein bestimmtes Mitglied des Fahrzeugverbands weitergeleitet wird;
Erzeugen einer Aufteilungsantwort, wobei das Mitglied des Fahrzeugverbands ein Aufteilungsantwortpaket erzeugt, das mittels einer Multi-Hop-Übertragung zurückgeleitet wird;
und Aufteilen des Fahrzeugverbands, wobei das Aufteilungsmanöver beginnt und das bestimmte Mitglied des Fahrzeugverbands zum Führungsfahrzeug eines neuen Fahrzeugverbands wird.

## Revendications

1. Un peloton de véhicules autonomes, comprenant au moins deux véhicules,
les phares (1) et les feux arrière (8) de chacun étant équipés d'au moins un émetteur VLC (2), un sous-émetteur VLC (3) et un récepteur VLC (4), lesdits véhicules étant disposés successivement avec un chef de peloton (15) à l'avant, toute dyade de véhicules, parmi lesdits au moins deux véhicules, étant composée d'un véhicule de tête (10) et d'un véhicule suiveur (11), entre lesquels existent une communication par faisceau de lumière visible, VLC, (12) ainsi qu'une communication IEEE 802.11p, dans lequel
chacun desdits au moins deux véhicules comprend une structure de connectivité IEEE 802.11p pour ladite communication IEEE 802.11p,
chacun desdits au moins deux véhicules comprend une unité de commande électronique (ECU) spécialisée,
ladite ECU spécialisée est configurée pour recevoir des données provenant dudit au moins un émetteur VLC (2), dudit sous-émetteur VLC (3) et dudit récepteur VLC (4), ainsi que de ladite structure de connectivité IEEE 802.11p,
ladite ECU spécialisée est en outre configurée pour conserver une base d'informations de véhicule et mettre en œuvre un protocole de communication et de gestion de peloton, moyennant quoi
chacun desdits au moins deux véhicules établit une clé secrète au moyen d'un échange de clés Diffie-Hellman entre ledit véhicule de tête (10) et ledit véhicule suiveur (11) de ladite dyade de véhicules, par l'intermédiaire de la communication par faisceau VLC, et stocke ladite clé secrète dans ladite base d'informations de véhicule,
chacun desdits au moins deux véhicules authentifie, au moyen de ladite clé secrète, au moins un message reçu par l'intermédiaire de la communication par faisceau VLC et de la communication IEEE 802.11p, un code d'authentification de message basé sur un chiffrement étant utilisé, et stocke dans ladite base d'informations de véhicule le contenu dudit au moins un message authentifié se rapportant à des informations de peloton ;
dans lequel une communication sécurisée est assurée entre les membres dudit peloton de véhicules et comporte un acheminement à sauts multiples dudit au moins un message émis périodiquement par le chef de peloton, par transmission de données au moyen de la communication par faisceau VLC et de la communication IEEE 802.11p.

2. Un procédé de communication entre les membres d'un peloton de véhicules autonomes comprenant un chef de peloton, selon lequel différentes manœuvres d'entrée, de sortie, de fusion et de scission sont exécutées, le procédé comprenant les étapes distinctes consistant à :
établir et mettre à jour une clé secrète par communication par lumière visible, VLC, un échange de clés Diffie-Hellman ayant lieu au sein d'une dyade de véhicules dudit peloton de véhicules, composée d'un initiateur et d'un répondeur, ou, en variante, d'un véhicule récepteur (16) et d'un véhicule demandeur (17) ;
authentifier un message, au moyen de ladite clé secrète, par l'intermédiaire des communications VLC et IEEE 802.11p, un code d'authentification de message basé sur un chiffrement par bloc étant utilisé pour valider à la fois l'intégrité et l'authenticité de messages reçus dans le cadre des communications entre les véhicules de ladite dyade de véhicules ;
et transmettre des données par l'intermédiaire des communications VLC et IEEE 802.11p, une communication sécurisée étant assurée entre les membres dudit peloton de véhicules et comportant un acheminement à sauts multiples desdits messages émis périodiquement par le chef de peloton (15), par transmission de données au moyen des communications VLC et IEEE 802.11p.

3. Procédé de communication entre les membres d'un peloton autonome selon la revendication 2, **caractérisé en ce que** ladite étape d'authentification de message comprend les étapes distinctes consistant à :
générer une clé, la clé secrète établie à l'étape précédente étant adoptée ;
signer un message, une étiquette étant générée au moyen de la clé secrète, d'un identifiant de véhicule, d'un identifiant de peloton et d'un numéro de séquence de paquet, et étant ajoutée à un message ;
et vérifier le message, un schéma en trois volets étant mis en œuvre pour vérifier l'authenticité du message reçu.

4. Procédé de communication entre les membres d'un peloton autonome selon la revendication 3, **caractérisé en ce que** ledit schéma en trois volets de ladite étape de vérification de message comprend les trois étapes supplémentaires consistant à :
décoder la clé secrète, en vérifiant si le message reçu est chiffré avec la clé secrète actuelle ;
comparer les étiquettes, l'étiquette étant reproduite et comparée à celle ajoutée au message reçu ;
et comparer les numéros de séquence, le numéro de séquence de message attendu et le numéro de séquence de message reçu étant comparés.

5. Procédé de communication entre les membres d'un peloton autonome selon la revendication 3 ou 4, **caractérisé en ce que** l'authentification dudit message lors de ladite étape de vérification de message n'est validée que si toutes les étapes sont exécutées avec succès, ledit message étant rejeté dans le cas contraire.

6. Procédé de communication entre les membres d'un peloton autonome selon la revendication 2, **caractérisé en ce que** la partie de transmission de données comprend en outre les étapes consistant à :
authentifier un message, le message reçu étant déchiffré et authentifié, à défaut de quoi il est rejeté ;
mettre à jour la base d'informations de véhicule comprenant les informations de peloton, le contenu du message reçu étant utilisé pour mettre à jour les données susmentionnées concernant le peloton, stockées localement dans la base d'informations de véhicule ;
générer un nouveau paquet de données, un message étant formé au moyen de données mises à jour dans la base d'informations de véhicule en vue de sa transmission ;
et signer et chiffrer le nouveau message en vue de sa transmission à un ou plusieurs autres véhicules.

7. Procédé de communication entre les membres d'un peloton autonome selon la revendication 2, **caractérisé en ce que** la manœuvre d'entrée dans le peloton comprend les étapes consistant à :
établir une clé secrète ;
vérifier la source, le ou les véhicules récepteurs (16) vérifiant si le message provient d'un autre véhicule situé sur une voie libre (14), et non d'une unité en bord de route (RSU) ;
envoyer une réponse de clé secrète ;
accuser réception de la session, l'autre véhicule envoyant successivement un paquet d'accusé de réception de session et une demande d'entrée ;
acheminer le paquet vers le chef de peloton, la demande d'entrée étant acheminée vers le chef de peloton (15) par transmission à sauts multiples ;
générer une réponse d'entrée, le chef de peloton (15) générant un message de réponse et le relayant au véhicule récepteur (16) par transmission à sauts multiples ;
et faire entrer le véhicule, la manœuvre commençant et les véhicules augmentant leur distance pour permettre au véhicule demandeur (17) de rejoindre le peloton.

8. Procédé de communication entre les membres d'un peloton autonome selon la revendication 2, **caractérisé en ce que** la manœuvre de sortie du peloton comprend les étapes consistant à :
générer un paquet de demande de sortie, un véhicule ayant l'intention de quitter le peloton générant une demande de sortie ;
acheminer le paquet vers le chef de peloton ;
générer une réponse de sortie, le chef de peloton (15) générant un message de réponse et le relayant au véhicule récepteur (16) par transmission à sauts multiples ;
et faire sortir le véhicule, la manœuvre de sortie commençant et le conducteur prenant le contrôle du véhicule pour quitter le peloton.

9. Procédé de communication entre deux pelotons autonomes selon la revendication 2, **caractérisé en ce que** la manœuvre de fusion de pelotons entre un peloton avant et un peloton arrière comprend les étapes consistant à :
établir une clé secrète primaire, le chef du peloton arrière envoyant une demande d'établissement de clé secrète au dernier membre du peloton avant ;
envoyer une réponse de clé secrète primaire ;
accuser réception de la session primaire, le chef du peloton arrière envoyant successivement un accusé de réception de session et un message de demande de fusion ;
acheminer le paquet vers le chef de peloton ;
générer une réponse de fusion, le chef du peloton avant générant un paquet de réponse et le relayant au dernier membre du peloton par transmission à sauts multiples ;
établir une clé secrète secondaire, le chef du peloton arrière envoyant, si la réponse de fusion est positive, une demande de mise à jour de clé secrète par VLC ;
envoyer une réponse de clé secrète secondaire ;
accuser réception de la session secondaire, le chef du peloton arrière envoyant successivement un accusé de réception de session et un paquet de vérification de fusion ;
acheminer le paquet vers le chef du peloton avant ;
et fusionner les pelotons, le chef du peloton arrière devenant membre, avec ses véhicules suiveurs.

10. Procédé de communication entre les membres d'un peloton autonome selon la revendication 2, **caractérisé en ce que** la manœuvre de scission du peloton comprend les étapes consistant à :
générer un paquet de demande de scission, le chef de peloton (15) générant une demande de sortie ;
acheminer le paquet vers un membre du peloton, le paquet de demande de scission étant relayé à un membre désigné du peloton par transmission à sauts multiples ;
générer une réponse de scission, le membre du peloton générant un paquet de réponse de scission, qui est relayé en retour par transmission à sauts multiples ;
et scinder le peloton, la manœuvre de scission commençant et le membre désigné du peloton devenant le chef d'un nouveau peloton.
